# EUROPEAN PATENT SPECIFICATION

(11) **EP 3 151 529 B1**
(45) Date of publication and mention of the grant of the patent: **04.12.2019**
(21) Application number: 15187613.3
(22) Date of filing: 30.09.2015
(51) Int. Cl.: H04M 7/00, H04M 1/00, H04M 3/56

(54) **SYSTEM AND METHOD FOR VOICE CALL SETUP**
SYSTEM UND VERFAHREN ZUR HERSTELLUNG EINER SPRACHVERBINDUNG
SYSTÈME ET PROCÉDÉ POUR L'ÉTABLISSEMENT D'UN APPEL VOCAL

(43) Date of publication of application: 05.04.2017
(73) Proprietor: Rebtel Networks AB, 111 44 Stockholm (SE)
(72) Inventor: DAHLQVIST, Johan, 167 56 Bromma (SE); PRETO, Vasco, 176 69 Järfälla (SE); KAMINSKI, Andrew, 187 30 Täby (SE); KYRITSIS, Thomas, 191 48 Sollentuna (SE); LINDHE, Pär, 126 51 Hägersten (SE); SKOGLUND, Thomas, 113 39 Stockholm (SE); KUMAR, Suresh, 145 67 Norsborg (SE); MORTAZAVI, Amir, 170 69 Solna (SE); CONNOR, Christopher, 114 27 Stockholm (SE)
(74) Representative: Bjerkéns Patentbyrå KB (Stockholm)

(56) References cited:
- EP-A1- 2 009 887
- US-A1- 2002 132 638
- US-A1- 2010 120 405

## Description

### THE BACKGROUND OF THE INVENTION AND PRIOR ART

The present invention relates generally to cost-efficient setup of voice calls between mobile terminals. More particularly the invention relates to a system according to the preamble of claim 1 and a corresponding method. The invention also relates to a computer program product and a processor-readable medium.

Recently, mainly due to the fact that an increasing amount of voice traffic is conveyed over the Internet, the telephone charges are being lowered gradually. For example, the pricing structure for both landline and mobile phone calls within a specific operator's network, country and/or region is often such that a flat rate applies regardless of usage. Typically, however, long distance calls are still relatively expensive, even though this may not be fully justified from a technical point-of-view. To this aim, various cost-reduction solutions have been developed, which also involve Internet-based technology.

US 6,256,389 shows an integrated telecommunication collaboration system, which allows close integration of desktop computer applications, data communications and public switched telephone network voice connections. Here, client software includes a voice agent for establishing telephone sessions, a data agent for establishing associated data sessions, a communications agent which synchronizes the data and voice agents, and an integration agent which integrates the data and voice communications with a computer operating system and with various applications. The integrated telecommunication collaboration system controls the establishment of harmonized calls by sending and receiving various requests and status messages to and from a server and another client.

US 2013/0331075 describes methods, systems and devices for joining a conference call on an electronic device. Methods are described which include steps of receiving a communication and determining at least one replacement conference call phone number based on information in the communication. Further steps may involve determining that the replacement conference call phone number is a preferred conference call phone number. Moreover, steps may be included that involves initiating a dialling sequence using the preferred conference call phone number.

US 7,209,947 discloses a system and method for providing data network-assisted conference service to a wireless terminal. Conference-related information is here received from a conference originator and stored. Prior to conference establishment time, a conference notification message is sent to the wireless terminal. A conference connection request is sent by the wireless terminal in response to the conference notification message, and a conference connection is established between the wireless terminal and a conference bridge that connects all conference participants.

US 2014/0362742 reveals a solution for facilitating the set-up of a conference call over a telecommunication network, where the call is between a first user and a one or more second users of the network. For example, via the solution, a user can establish a conference call in a very short time and easy way. In addition, he/she is able to book and manage their conferences through a smartphone app, or a mail server client.

US 2010/0120405 relates to a system for efficient call initiation in internet-based mobile telephony systems.

### PROBLEMS ASSOCIATED WITH THE PRIOR ART

Thus, various solutions are known through which voice calls can be set up between two or more users, inter alia based on conference bridges. However, these solutions are relatively complicated to implement, especially for mobile subscribers.

### SUMMARY OF THE INVENTION

The object of the present invention is therefore to alleviate the above problem, and offer a cost-efficient, reliable and user-friendly call-setup solution for mobile users, which can be applied in a straightforward manner regardless of whether the parties involved are located in the same network, or on different continents.

According to one aspect of the invention, the object is achieved by the initially described system, wherein in response to the user-generated call-setup command, the software-implemented call handling tool in the originating device is also configured to make a first call to a first bridge node over the public land mobile network (PLMN) using a first telephone number stored in the originating device.

This system is advantageous because the signaling relating to the voice connection to be established over the PLMN can be performed independently from the signaling involving the server node, which aims at paging the terminating device and informing its user of the incoming call. Thus, the overall call setup can be made highly efficient. In fact, depending on the latencies in the different networks, the terminating device may even establish a connection with a bridge node before the originating device does so.

According to a preferred embodiment of this aspect of the invention, the originating device contains a set of different telephone numbers, and the software-implemented call handling tool in the originating device is configured to select the first telephone number based on a location of the originating device. Thereby, for instance, the first call can be made to a geographically nearest first bridge node, which is normally advantageous from a cost point-of-view.

According to preferred embodiments of this aspect of the invention, the software-implemented call handling tool in the originating device is configured to either make the first call prior to sending the call-setup request to the server node; or in parallel with or after sending the call-setup request to the server node. Namely, the first call can be made completely independent from the call-setup request.

According to another preferred embodiment of this aspect of the invention, in response to the first call, the first bridge node, in turn, is configured to send a first bridge-acknowledge message to the server node. The first bridge-acknowledge message specifies a first network address of the first bridge node. Hence, the first bridge-acknowledge message informs the server node about which bridge node that will be employed for the voice call to be set up.

According to yet another preferred embodiment of this aspect of the invention, in response to the call-setup request, the server node, in turn, is configured to send a service message to the terminating device. The service message indicates an identity of the originating device and a petition to establish a voice connection with the terminating device. Consequently, the service message informs the terminating device of the incoming call from the originating device.

Preferably, in response to the service message, the software-implemented call handling tool in the terminating device is configured to generate an alert signal, which is adapted to notify a user of the terminating device of the incoming call from the originating device. For example, the alert signal may involve producing an acoustic signal, a text message, graphics and/or an optic signal.

According to a further preferred embodiment of this aspect of the invention, after having started to generate the alert signal, the software-implemented call handling tool in the terminating device is configured to make a second call to a second bridge node in response to an accept command from a user of the terminating device. Here, the accept command for example may be represented by activation of: an on-screen input means, a key or a button or by a voice command. The second call is made over the public land mobile network using a second telephone number, which preferably is stored in the terminating device. In fact, the second telephone number may be identical to the first telephone number. Thus, in a simplest possible implementation of the invention, all devices only store a single telephone number, which is used by the software-implemented call handling tool both for placing and receiving calls.

However, according to a preferred embodiment of this aspect of the invention, the terminating device contains a set of different telephone numbers, and the software-implemented call handling tool in the terminating device is configured to select the second telephone number based on a location of the terminating device. Thereby, analogous to the first call, the second call can made to a second bridge node that is a geographically nearest to the terminating device. Further preferably, if possible, the second call is made to a second bridge node within a home network of the terminating device. Namely, this is most advantageous from a cost point-of-view.

According to still another preferred embodiment of this aspect of the invention, in response to the second call, the second bridge node, in turn, is configured to send a second bridge-acknowledge message to the server node. The second bridge-acknowledge message specifies a second network address of the second bridge node. Thus, based on the second bridge-acknowledge message, the server node is informed of which second bridge node that will be used to set up the call. In response to the first and second bridge-acknowledge messages, the server node is configured to bridge-prompting messages to the first and second bridge nodes respectively. Consequently, it is confirmed to the first and second bridge nodes in a simple and straightforward manner that a call will be set up between the originating and terminating devices using the first and second bridge nodes.

According to another preferred embodiment of this aspect of the invention, in response to the bridge-prompting messages, the first and second bridge nodes are configured to cause a connection between the originating and terminating devices over the conference bridges. Here, it is worth recalling that first bridge node may be identical to the second bridge node. Of course, in such a case, it is relatively simple to interconnect the originating and terminating devices.

However, in the general case, when two different bridge nodes are involved, the terminating device is preferably configured to set up an initial signaling connection of the second call to the second bridge node. Then, the terminating device is configured to set up a voice connection of the second call to the first bridge node. I.e., once the call has been set up, the payload traffic will go exclusively through the first bridge node, which, normally, is located relatively near the originating device.

According to another aspect of the invention, the object is achieved by the method described initially, which further involves making, via the software-implemented call handling tool in the originating device, a first call to a first bridge node. The first call is made in response to the call-setup command, and is effected over PLMN using a first telephone number that is stored in the originating device. The advantages of this method, as well as the preferred embodiments thereof, are apparent from the discussion above with reference to the proposed diagnostic apparatus.

According to a further aspect of the invention the object is achieved by a computer program product loadable into the memory of at least one processor, and includes software adapted to implement the method proposed above when said program is run on at least one processor.

According to another aspect of the invention the object is achieved by a processor-readable medium, having a program recorded thereon, where the program is to control at least one processor to perform the method proposed above when the program is loaded into the at least one processor.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows an overview of a system according to a first embodiment of the invention;
- Figure 2: shows an overview of a system according to a second embodiment of the invention; and
- Figure 3: illustrates, by means of a flow diagram, the general method according to the invention.

### DESCRIPTION OF PREFERRED EMBODIMENTS OF THE INVENTION

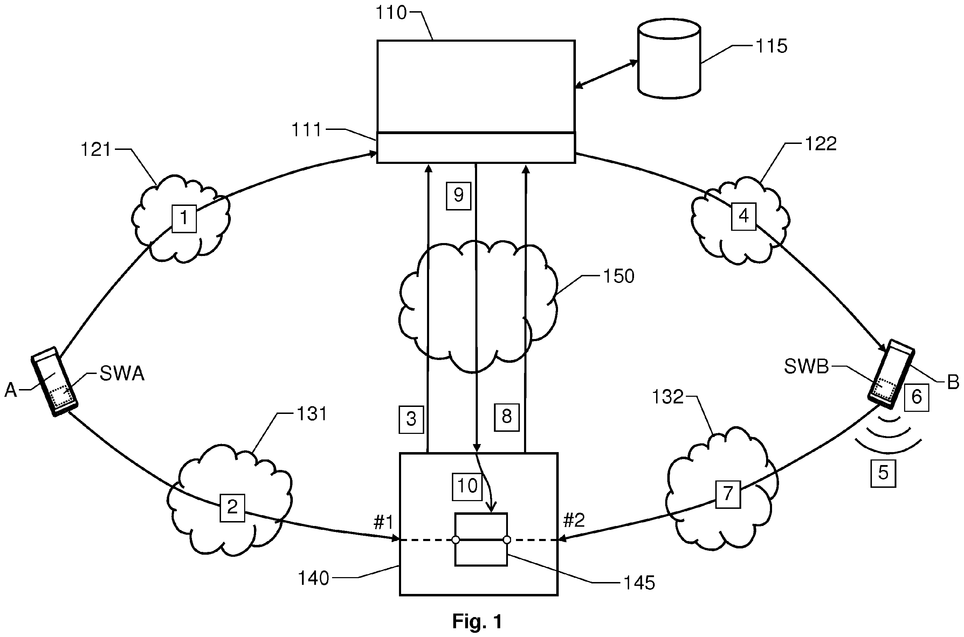

Initially, we refer to Figure 1, which shows an overview of a system according to a first embodiment of the invention for setting up a call between an originating device A and a terminating device B. The originating and terminating devices A and B respectively each has access to a PLMN 131 and 132 as well as a mobile data network 121 and 122 via at least one respective wireless interface, e.g. based on radio, optic or inductive technology.

Theoretically, a first PLMN 131 to which the originating device A has access may be identical to a second PLMN 132 to which the terminating device B has access. Analogously, a first mobile data network 121 to which the originating device has access may be identical to a second mobile data network 122 to which the terminating device B has access. Nevertheless, for illustrating purposes, and to show a commercially more interesting alternative, the networks 131, 132, 121 and 122 are here represented as separate entities.

Moreover, the originating and terminating devices A and B include a respective software-implemented call handling tool SWA and SWB, e.g. a so-called app, which is configured to assist a user in the process of placing and receiving calls.

The proposed system includes a server node 110, which is connected to the mobile data networks 121 and 122 as well as to a data network 150, e.g. the Internet. The system also includes at least one bridge node 140, which is connected to the server node 110, the mobile data networks 121 and 122, the PLMN:s 131 and 132 plus the data network 150 through which bridge node 140 can communicate with the server node 110.

According to the invention, a first user who wants to place a call to a second user generates a call-setup command in the originating device A. The originating device A is adapted for wireless communication and may thus be represented e.g. by a smartphone, a tablet, a PDA (personal digital assistant) or a laptop.

In response to the call-setup command, the software-implemented call handling tool SWA in the originating device A is configured to send a call-setup request 1 from the originating device A to the server node 110 over a first mobile data network 121 to which the originating device A is connected. The call-setup request 1 indicates an identity of the terminating device B, such as a telephone number.

In response to the call-setup command, the software-implemented call handling tool SWA in the originating device A is also configured to make a first call 2 to one bridge node 140 of the above-mentioned at least one bridge node. The first call 2 is made over a first PLMN 131 to which the originating device A is connected and using a first telephone number #1 that is stored in the originating device A.

The server node 110, in turn, is configured to receive the call-set-up request 1, preferably via an application programming interface (API), and based thereon, set up a call between the originating device A and the terminating device B over a conference bridge 145 in the bridge node 140. This process will be described in further detail below.

Preferably, the originating device A contains a set of different first telephone numbers #1, and the software-implemented call handling tool SWA is configured to select a particular first telephone number #1 based on a current location of the originating device A. Thereby, the first call 2 can for example be made to the bridge node 140, which is geographically nearest to the originating device A; or more preferably, to a physically nearest bridge node 140 that is also connected to a PLMN 131 to which a user of the originating device A is currently attached.

The server node 110 is preferably communicatively connected to a database 115 storing data about all registered users in the system, including subscribers associated with the originating and terminating devices A and B. Thereby, upon receipt of the call-setup request 1, the server node 110 may verify that the users involved are authorized, and thus allow a call to be set up. It is further advantageous if the server node 110 is configured to repeatedly feedback updated data from the database 115 to the devices A and B, or more precisely to all subscribers in the system, concerning which of the contacts in a particular device's contact list who has a subscription with the system (i.e. that is listed in the database 115). Namely, thereby, the software-implemented call handling tool SWA may be arranged to (i) indicate whether or not a contact in the device's contact list is available via the system and/or (ii) automatically choose to setup a call via the system to any callee who is available through this system.

The software-implemented call handling tool SWA in the originating device A is either configured to make the first call 2 prior to sending the call-setup request 1 to the server node 110; or in parallel with, or after, sending the call-setup request 1 to the server node 110. Generally, to minimize the call-setup time, it is desirable that the call-setup request 1 is sent out and the first call 2 is made as soon as possible. However, in some technical environment it is necessary that there is a certain temporal relationship between them. It is therefore advantageous that the invention offers full freedom in terms of whether the call-setup request 1 is sent out before, in parallel with or after that the first call 2 is made.

In any case, in response to the first call 2, the bridge node 140 is configured to send a first bridge-acknowledge message 3 to the server node 110. The first bridge-acknowledge message 3 specifies a first network address of the bridge node 140 so as to inform the server node 110 of the identity of the bridge node 140.

In response to the call-setup request 1, the server node 110 is configured to send a service message 4 to the terminating device B. The service message 4 indicates an identity of the originating device A, for instance a caller line identification (CLI), and a petition to establish a voice connection with the terminating device B.

In response to the service message 4, the software-implemented call handling tool SWB in the terminating device B is configured to generate an alert signal 5 that is adapted to notify a user of the terminating device B of an incoming call from the originating device A, for example by producing an acoustic signal, showing a text message on a display, showing graphics on a display, activating a light source and/or causing the terminating device B to vibrate.

After having initiated the alert signal 5, the software-implemented call handling tool SWB is configured to wait for an accept command 6 from the user of the terminating device B. If such an accept command 6 is received in the terminating device B, the software-implemented call handling tool SWB is configured to make a second call 7 to the bridge node 140. Alternatively, the software-implemented call handling tool SWB may be configured to make the second call 7 to the bridge node 140 at any time after receiving the service message 4. I.e. the second call 7 can be made *before* the device B user accepts 6 the incoming call. This is advantageous because it reduces the overall delay until a connection between the devices A and B can be established. At the same time, no costs will result from the second call 7 if the device B user rejects the incoming call, or does not accept it before the device A user hangs up. In fact, if no connection is established between the devices A and B, no costs will result on the originating side either. In other words, if the device B user rejects the incoming call, or does not accept the call before the device A user hangs up, the subscription associated with the originating device A will not be charged for first call 2 to the bridge node 140. Namely, the first call 2 is answered only if the second call 7 reaches the bridge node 140. According to standard telecommunication billing routines, no charge is incurred for either party unless both parties arrive at the bridge node 140, since it is only at this point in time that the call is answered.

In yet another alternative, the terminating device B may be configured to answer the incoming call automatically (i.e. generate the accept command 6 without any user interaction being required) at least if the service message 4 fulfills certain requirements, e.g. with respect to CLI of the originating device A. Such a behavior is desirable since it enables cost-efficient remote surveillance. For example, a user may thereby call a distant facility to investigate a suspected break-in, check the condition of a pet or effect baby watching.

The second call 7 is made over the PLMN, here 132, using a second telephone number #2, which may or may not be identical to the first telephone number #1. The second telephone number #2 is preferably stored in the terminating device B, and may either be fixed or be selected dynamically, e.g. based on a location of the terminating device B. In the former case, the second telephone number #2 can be a default number, which may be the same as the first telephone number #1. In the latter case, however, the second telephone number #2 is more probably different from the first telephone number #1.

In response to the second call 7, the bridge node 140 is configured to send a second bridge-acknowledge message 8 to the server node 110. The second bridge-acknowledge message 8 specifies a second network address of the bridge node 140, for instance the same address as specified by the first bridge acknowledge message 3. In response to the first and second bridge-acknowledge messages 3 and 8, the server node 110 is configured to send a bridge-prompting message 9 to the bridge node 140. Thereafter, the originating and terminating devices A and B can be interconnected.

Preferably, upon receipt of the bridge-prompting message 9, the bridge node 140 is configured to cause 10 a connection between the originating device A and the terminating device B over the conference bridge 145 in the bridge node 140.

The server node 110 and the bridge node 140 are preferably communicatively connected to at least one memory unit storing a computer program product, which, in turn, contains software for making at least one processor in the server node 110 and the bridge node 140 execute the above-described actions together with the software-implemented call handling tools SWA and SWB when the computer program product is run on the at least one processor.

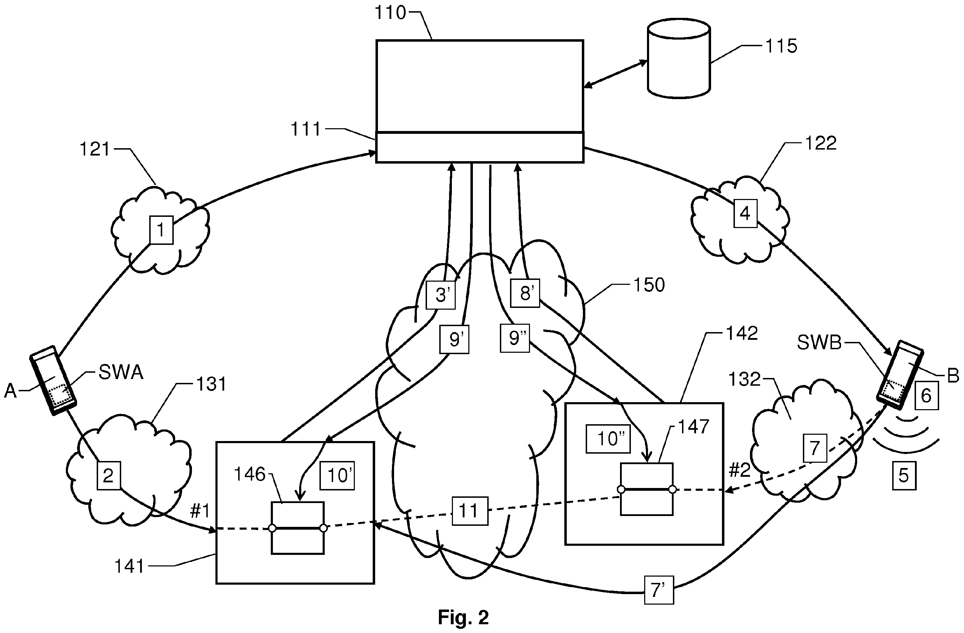

Figure 2 shows an overview of a system according to a second embodiment of the invention. Here, all reference labels which also occur in Figure 1 designate the same entities, signals, messages etc. as described above with reference to Figure 1.

In contrast to Figure 1, Figure 2 exemplifies a system having two bridge node 141 and 142, each of which is connected to the server node 110, a mobile data network 121 and 122 respectively and a public land mobile network 131 and 132 respectively. Naturally, the present invention is equally well applicable to a system including any larger number of bridge nodes. However, for clarity reasons, we do not illustrate this here. In any case, when interconnecting two devices A and B, a maximum of two bridge nodes will be concurrently engaged.

Analogous to the above-described embodiment, also in Figure 2, we assume that a user of the originating device A generates a call-setup command via the software-implemented call handling tool SWA in the originating device A. In response thereto, the software-implemented call handling tool SWA sends a call-setup request 1 to the server node 110, which call-setup request 1 inter alia indicates an identity of the terminating device B, for instance in the form of a telephone number.

Based on the call-setup request 1, the server node 110 is configured to set up a call between the originating device A and the terminating device B over conference bridges 146 and 147 in first and second bridge nodes 141 and 142 respectively in a manner similar to what has been described above with reference to Figure 1.

More precisely, in response to the user-generated call-setup command, the software-implemented call handling tool SWA in the originating device A is further configured to make a first call 2 to a first bridge node 141 over the PLMN 131 using a first telephone number #1 stored in the originating device A. The first telephone number #1, in turn, may either be pre-defined or be selected dynamically, e.g. depending on the location of the originating device A.

Again, in response to the call-setup request 1, the server node 110 is configured to send a service message 4 to the terminating device B, which service message 4 indicates an identity of the originating device A, e.g. a CLI, plus a petition to establish a voice connection with the terminating device B.

Based on the service message 4, the software-implemented call handling tool SWB in the terminating device B is configured to generate an alert signal 5 notifying the user of the terminating device B of an incoming call from the originating device A.

After having initiated the alert signal 5, the software-implemented call handling tool SWB is configured to wait for any accept command 6 from the user of the terminating device B. If such an accept command 6 is received in the terminating device B, the software-implemented call handling tool SWB is configured to make a second call 7 to the second bridge node 142. Analogous to the above, the second call 7 to the bridge node 142 may, of course, also be made in parallel with the alert signal 5, or automatically without waiting for an accept command 6.

The second call 7 is made over the PLMN 132 using a second telephone number #2, which is different from the first telephone number #1. Namely, the second telephone number #2 designates another bridge node, namely 142. Moreover, the second telephone number #2 is preferably stored in the terminating device B, and may either be fixed or be selected dynamically, e.g. based on a location of the terminating device B. Possibly, an additional constraint may be applied with respect to the operator of the second bridge node 142 in relation to the operator with which the user of the terminating device B has a subscription, such that, if possible, bridge nodes associated with other operators are avoided.

In response to the second call 7, the second bridge node 142, in turn, is configured to send a second bridge-acknowledge message 8' to the server node 110. The second bridge-acknowledge message 8' specifies a second network address of the second bridge node 142, so as to inform the server node 110 of the identity of the second bridge node 142. Then, in response to the first and second bridge-acknowledge messages 3' and 8' respectively, the server node 110 is configured to send a respective bridge-prompting message 9' and 9" to the first and second bridge nodes 141 and 142.

Based on a first bridge-prompting message 9' of said bridge-prompting messages, the first bridge node 141 is configured to cause a first connection 10' via a first conference bridge 146 therein, which first connection forms one part of the connection between the devices A and B.

Correspondingly, based on a second bridge-prompting message 9" of said bridge-prompting messages, the second bridge node 142 is configured to cause a second connection 10" via a second conference bridge 147 therein, which second connection forms another part of the connection between the devices A and B, at least in an initial signaling phase. Namely, preferably, once a connection 11 has been established between the first and second conference bridges 146 and 147 over an interconnection network 150, such as the Internet, it is generally advantageous to bypass the second bridge node 142, and instead set up a direct connection 7' from the PLMN 132 through which the terminating device B communicates to the first bridge node 141.

The server node 110 and the first and second bridge nodes 141 and 142 are preferably communicatively connected to at least one memory unit storing a computer program product, which, in turn, contains software for making at least one processor in the server node 110 and the first and second bridge nodes 141 and 142 execute the above-described actions together with the software-implemented call handling tools SWA and SWB when the computer program product is run on the at least one processor.

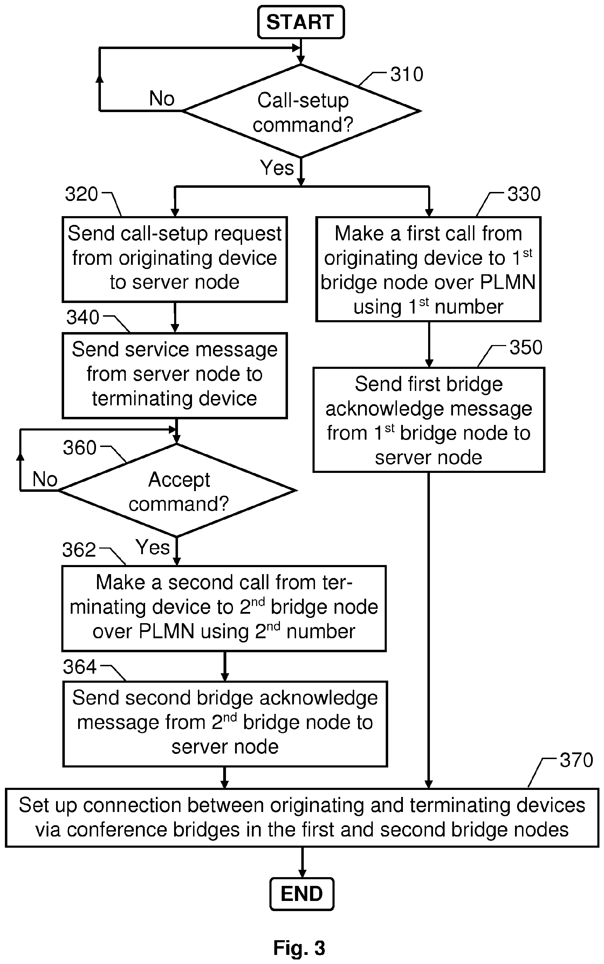

In order to sum up, and with reference to the flow diagram in Figure 3, we will now describe the general method according to the invention for setting up a call between an originating device and a terminating device, which each has access to a PLMN as well as to a mobile data network.

A first step 310, checks if a call-setup command has been received in the originating device; and if so, steps 320 and 330 follow. Otherwise, the procedure loops back and stays in step 310.

In step 320, a call-setup request is sent from the originating device to the server node over a first mobile data network. In step 330, a first call is made over PLMN from the originating device to a first bridge node using a first telephone number.

A step 340 subsequent to step 320, involves sending a service message from the server node to the terminating device. A step 350 following step 330, involves sending a first bridge acknowledge message from the first bridge to the server node over a data network, e.g. the Internet.

A step 360 succeeding step 340, checks if the incoming call has been accepted in the terminating device; and if so a step 362 follows. Otherwise, the procedure loops back and stays in step 360. Of course, in practice, the process times out if the call remains unaccepted for a certain time. However, for clarity reasons this is not specifically illustrated in the flow diagram.

In step 362, a second call is made from the terminating device to a second bridge node (which may be identical to the first bridge node called in step 330). Then, a step 364, a second bridge acknowledge message is sent from the second bridge node to the server node over a data network, e.g. the Internet.

A step 370, which follows after parallel steps 364 and 370, sets up a connection between the originating and terminating devices A and B via conference bridges in the first and second bridge nodes. Thereafter, the call-setup procedure ends. However, the call, as such, remains active until at least one of the devices A and B disconnects.

All of the process steps, as well as any sub-sequence of steps, described with reference to Figure 3 above may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes. The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims. The scope of protection of the invention is defined by the appended claims.

## Claims

1. A system for setting up a call between an originating device (A) and a terminating device (B), the originating device (A) and the terminating device (B) each having access both to a public land mobile network (131, 132) and a mobile data network (121, 122), the originating device (A) and the terminating device (B) including a respective software-implemented call handling tool (SWA; SWB) configured to assist a user in the process of placing and receiving calls, the system comprising:
a server node (110) connected to the mobile data network (121, 122), and
at least one bridge node (140, 141, 142) connected to the server node (110), the mobile data network (121, 122) and the public land mobile network (131, 132),
the server node (110) being configured to:
receive a call-setup request (1) from the originating device (A), the call-setup request (1) being generated by the software-implemented call handling tool (SWA) in the originating device (A) in response to a call-setup command from a user of the originating device (A), the call-setup request (1) indicating an identity of the terminating device (B), and
based on the call-setup request (1), set up a call between the originating device (A) and the terminating device (B) over at least one conference bridge (145, 146, 147) in the at least one bridge node (140, 141, 142),
wherein in response to the call-setup command, the software-implemented call handling tool (SWA) in the originating device (A) is further configured to make a first call (2) to a first bridge node (140, 141) of the at least one bridge node over the public land mobile network (131) using a first telephone number (#1) stored in the originating device (A),
wherein, in response to the call-setup request (1), the server node (110) is configured to send a service message (4) to the terminating device (B), the service message (4) indicating an identity of the originating device (A) and a petition to establish a voice connection with the terminating device (B),
wherein, in response to the service message (4), the software-implemented call handling tool (SWB) in the terminating device (B) is configured to generate an alert signal (5) adapted to notify a user of the terminating device (B) of an incoming call from the originating device (A), and
wherein, after having initiated the alert signal (5), the software-implemented call handling tool (SWB) in the terminating device (B) is configured to make a second call (7) to a second bridge node (140, 142) of the at least one bridge node in response to an accept command (6) from a user of the terminating device (B), the second call (7) being made over the public land mobile network (132) using a second telephone number (#2),
**characterized in that**
the software-implemented call handling tool (SWB) in the terminating device (B) is configured to select the second telephone number (#2) based on a location of the terminating device (B).

2. The system according to claim 1, wherein the software-implemented call handling tool (SWA) in the originating device (A) is configured to select the first telephone number (#1) based on a location of the originating device (A).

3. The system according to any one of claims 1 or 2, wherein the software-implemented call handling tool (SWA) in the originating device (A) is configured to make the first call (2) prior to sending the call-setup request (1) to the server node (110).

4. The system according to any one of claims 1 or 2, wherein the software-implemented call handling tool (SWA) in the originating device (A) is configured to make the first call (2) in parallel with or after sending the call-setup request (1) to the server node (110).

5. The system according to any one of the preceding claims, wherein, in response to the first call (2), the first bridge node (140, 141) is configured to send a first bridge-acknowledge message (3, 3') to the server node (110), the first bridge-acknowledge message (3; 3') specifying a first network address of the first bridge node (140; 141).

6. The system according to any one of the preceding claims, wherein the second telephone number (#2) is stored in the terminating device (B).

7. The system according to any one of the preceding claims, wherein,
in response to the second call (7), the second bridge node (140, 142) is configured to send a second bridge-acknowledge message (8; 8') to the server node (110), the second bridge-acknowledge message (8; 8') specifying a second network address of the second bridge node (140; 141, 142); and
in response to the first and second bridge-acknowledge messages (3, 8; 3', 8'), the server node (110) is configured to send at least one bridge-prompting message (9; 9', 9") to the first and second bridge nodes (140; 141, 142).

8. The system according to claim 7, wherein, in response to the at least one bridge-prompting message (9; 9', 9"), the first and second bridge nodes (140; 141 142) are configured to cause (10; 10', 10") a connection (11) between the originating device (A) and the terminating device (B) over the at least one conference bridge (145).

9. The system according to any one of the preceding claims, wherein the terminating device (B) is configured to:
set up an initial signaling connection (7) of the second call to the second bridge node (142), and
set up a voice connection (7') of the second call to the first bridge node (141).

10. The system according to claim 8 or 9, wherein the first bridge node (140) is the same as the second bridge node (140).

11. A method of setting up a call between an originating device (A) and a terminating device (B), the originating device (A) and the terminating device (B) each having access both to a public land mobile network (131, 132) and a mobile data network (121, 122), the originating device (A) and the terminating device (B) including a respective software-implemented call handling tool (SWA; SWB) configured to assist a user in the process of placing and receiving calls using a server node (110) connected to the mobile data network (121, 122) and at least one bridge node (140, 141, 142) connected to the server node (110), the mobile data network (121, 122) and the public land mobile network (131, 132), the method comprising:
receiving in the server node (110) a call setup request (1) from the originating device (A), the call-setup request (1) being generated by the software-implemented call handling tool (SWA) in the originating device (A) in response to a call-setup command from a user of the originating device (A), the call-setup request (1) indicating an identity of the terminating device (B), and
based on the call setup request (1), setting up a call between the originating device (A) and the terminating device (B) over at least one conference bridge (145, 146, 147) in the at least one bridge node (140, 141, 142), making, via the software-implemented call handling tool (SWA) in the originating device (A), a first call (1) to a first bridge node (140, 141) of the at least one bridge node over the public land mobile network (131) using a first telephone number (#1) stored in the originating device (A) in response to the call-setup command,
sending from the server node (110), in response to the call-setup request (1), a service message (4) to the terminating device (B), the service message (4) indicating an identity of the originating device (A) and a petition to establish a voice connection with the terminating device (B),
generating in the software-implemented call handling tool (SWB) in the terminating device (B), in response to the service message (4), an alert signal (5) adapted to notify a user of the terminating device (B) of an incoming call from the originating device (A), and wherein, after having initiated the alert signal (5), the method comprises:
making, via the software-implemented call handling tool (SWB) in the terminating device (B), a second call (7) to a second bridge node (140, 142) of the at least one bridge node in response to an accept command (6) from a user of the at least one terminating device (B), the second call (7) being made over the public land mobile network (132) using a second telephone number (#2),
**characterized by**
selecting, via the software-implemented call handling tool (SWB) in the terminating device (B), the second telephone number (#2) based on a location of the terminating device (B).

12. The method according to claim 11, comprising:
selecting, via the software-implemented call handling tool (SWA) in the originating device (A), the first telephone number (#1) based on a location of the originating device (A).

13. The method according to any one of claims 11 or 12, comprising:
making, via the software-implemented call handling tool (SWA) in the originating device (A), the first call (2) prior to sending the call-setup request (1) to the server node (110).

14. The method according to any one of claims 11 to 13, comprising:
making, via the software-implemented call handling tool (SWA) in the originating device (A), the first call (2) in parallel with or after sending the call-setup request (1) to the server node (110).

15. The method according to any one of claims 11 to 14, comprising:
sending, in response to the first call (2), a first bridge-acknowledge message (3, 3') from the first bridge node (140, 141) to the server node (110), the first bridge-acknowledge message (3; 3') specifying a first network address of the first bridge node (140; 141).

16. The method according to any one of claims 11 to 15, wherein the second telephone number (#2) is stored in the terminating device (B).

17. The method according to any one of claims 11 to 16, comprising:
sending, in response to the second call (7), a second bridge-acknowledge message (8; 8') from the second bridge node (140, 142) to the server node (110), the second bridge-acknowledge message (8; 8') specifying a second network address of the second bridge node (140; 141 142); and
sending, in response to the bridge-acknowledge message (8; 8'), at least one bridge-prompting message (9; 9', 9") to the first and second bridge nodes (140; 141, 142).

18. The method according to claim 17, comprising:
causing, in response to the bridge-prompting message (9; 9', 9"), the first and second bridge nodes (140; 141, 142) to connect (10; 10', 10") the originating device (A) with the terminating device (B) over the at least conference bridge (145; 146, 146).

19. The method according to any one of the claims 11 to 18, comprising:
setting up an initial signaling connection (7) of the second call between the terminating device (B) and the second bridge node (142), which second bridge node (142) is connected to a public land mobile network (132) through which the terminating device (B) communicates, and
setting up a voice connection (7') of the second call between the terminating device (B) and the first bridge node (141) and the terminating device (B) communicates.

20. The method according to any one of the claims 18 or 19, wherein the first bridge node (140) is the same as the second bridge node (140).

21. A computer program product loadable into the memory of at least one processor, comprising software for executing the method of any of the claims 11 to 20 when said computer program product is run on the at least one processor.

22. A processor-readable medium comprising instructions which, when executed by at least one processor, cause the at least one processor to perform a method according to any one of claims 11 to 20.

## Patentansprüche

1. System zum Herstellen einer Anrufverbindung zwischen einem Ursprungsgerät (A) und einem Endgerät (B), wobei sowohl das Ursprungsgerät (A) als auch das Endgerät (B) Zugang sowohl zu einem öffentlichen landgestützten Mobilfunknetzwerk (131, 132) als auch zu einem mobilen Datennetzwerk (121, 122) haben, wobei das Ursprungsgerät (A) und das Endgerät (B) jeweils ein softwareimplementiertes Anrufabwicklungsprogramm (SWA; SWB) enthalten, das dazu konfiguriert ist, einen Nutzer beim Tätigen und Entgegennehmen von Anrufen zu unterstützen, das System umfassend:
einen Serverknoten (110), der mit dem mobilen Datennetzwerk (121, 122) verbunden ist, und
mindestens einen Brückenknoten (140, 141, 142), der mit dem Serverknoten (110), dem mobilen Datennetzwerk (121, 122) und dem öffentlichen landgestützten Mobilfunknetzwerk (131, 132) verbunden ist,
wobei der Serverknoten (110) konfiguriert ist zum:
Empfangen einer Anrufaufbauanfrage (1) von dem Ursprungsgerät (A), wobei die Anrufaufbauanfrage (1) von dem softwareimplementierten Anrufabwicklungsprogramm (SWA) in dem Ursprungsgerät (A) als Reaktion auf einen Anrufaufbaubefehl eines Nutzers des Ursprungsgeräts (A) erzeugt wird, wobei die Anrufaufbauanfrage (1) eine Identität des Endgeräts (B) angibt, und,
auf der Grundlage der Anrufaufbauanfrage (1), Herstellen einer Anrufverbindung zwischen dem Ursprungsgerät (A) und dem Endgerät (B) über mindestens eine Konferenzbrücke (145, 146, 147) in dem mindestens einen Brückenknoten (140, 141, 142),
wobei, als Reaktion auf den Anrufaufbaubefehl, das softwareimplementierte Anrufabwicklungsprogramm (SWA) in dem Ursprungsgerät (A) ferner konfiguriert ist zum Tätigen eines ersten Anrufs (2) an einen ersten Brückenknoten (140, 141) aus den mindestens einen Brückenknoten über das öffentliche landgestützte Mobilfunknetzwerk (131) unter Verwendung einer ersten Telefonnummer (#1), die in dem Ursprungsgerät (A) gespeichert ist, wobei, als Reaktion auf die Anrufaufbauanfrage (1), der Serverknoten (110) konfiguriert ist zum Senden einer Dienstnachricht (4) an das Endgerät (B), wobei die Dienstnachricht (4) eine Identität des Ursprungsgeräts (A) und ein Gesuch zum Herstellen einer Sprachverbindung mit dem Endgerät (B) angibt, wobei, als Reaktion auf die Dienstnachricht (4), das softwareimplementierte Anrufabwicklungsprogramm (SWB) in dem Endgerät (B) konfiguriert ist zum Erzeugen eines Alarmsignals (5), das dazu angepasst ist, einen Nutzer des Endgeräts (B) über einen eingehenden Anruf von dem Ursprungsgerät (A) zu benachrichtigen, und
wobei, nach dem Einleiten des Alarmsignals (5), das softwareimplementierte Anrufabwicklungsprogramm (SWB) in dem Endgerät (B) konfiguriert ist zum Tätigen eines zweiten Anrufs (7) an einen zweiten Brückenknoten (140, 142) aus den mindestens einen Brückenknoten als Reaktion auf einen Annahmebefehl (6) von einem Nutzer des Endgeräts (B), wobei der zweite Anruf (7) über das öffentliche landgestützte Mobilfunknetzwerk (132) unter Verwendung einer zweiten Telefonnummer (#2) getätigt wird,
**dadurch gekennzeichnet, dass**
das softwareimplementierte Anrufabwicklungsprogramm (SWB) in dem Endgerät (B) konfiguriert ist zum Auswählen der zweiten Telefonnummer (#2) auf der Grundlage eines Standorts des Endgeräts (B).

2. System nach Anspruch 1, wobei das softwareimplementierte Anrufabwicklungsprogramm (SWA) in dem Ursprungsgerät (A) konfiguriert ist zum Auswählen der ersten Telefonnummer (#1) auf der Grundlage eines Standorts des Ursprungsgeräts (A).

3. System nach einem der Ansprüche 1 oder 2, wobei das softwareimplementierte Anrufabwicklungsprogramm (SWA) in dem Ursprungsgerät (A) konfiguriert ist zum Tätigen des ersten Anrufs (2) vor dem Senden der Anrufaufbauanfrage (1) an den Serverknoten (110).

4. System nach einem der Ansprüche 1 oder 2, wobei das softwareimplementierte Anrufabwicklungsprogramm (SWA) in dem Ursprungsgerät (A) konfiguriert ist zum Tätigen des ersten Anrufs (2) parallel zum oder nach dem Senden der Anrufaufbauanfrage (1) an den Serverknoten (110).

5. System nach einem der vorangehenden Ansprüche, wobei, als Reaktion auf den ersten Anruf (2), der erste Brückenknoten (140, 141) konfiguriert ist zum Senden einer ersten Brückenbestätigungsnachricht (3, 3') an den Serverknoten (110), wobei die erste Brückenbestätigungsnachricht (3; 3') eine erste Netzwerkadresse des ersten Brückenknotens (140; 141) aufführt.

6. System nach einem der vorangehenden Ansprüche, wobei die zweite Telefonnummer (#2) in dem Endgerät (B) gespeichert ist.

7. System nach einem der vorangehenden Ansprüche, wobei,
als Reaktion auf den zweiten Anruf (7), der zweite Brückenknoten (140, 142) konfiguriert ist zum Senden einer zweiten Brückenbestätigungsnachricht (8; 8') an den Serverknoten (110), wobei die zweite Brückenbestätigungsnachricht (8; 8') eine zweite Netzwerkadresse des zweiten Brückenknotens (140; 141, 142) aufführt; und,
als Reaktion auf die erste und zweite Brückenbestätigungsnachricht (3, 8; 3', 8'), der Serverknoten (110) konfiguriert ist zum Senden mindestens einer Brückenanforderungsnachricht (9; 9', 9") an den ersten und zweiten Brückenknoten (140; 141, 142).

8. System nach Anspruch 7, wobei, als Reaktion auf die mindestens eine Brückenanforderungsnachricht (9; 9', 9"), der erste und zweite Brückenknoten (140; 141 142) konfiguriert sind zum Herbeiführen (10; 10', 10") einer Verbindung (11) zwischen dem Ursprungsgerät (A) und dem Endgerät (B) über die mindestens eine Konferenzbrücke (145).

9. System nach einem der vorangehenden Ansprüche, wobei das Endgerät (B) konfiguriert ist zum:
Herstellen einer anfänglichen Signalisierungsverbindung (7) des zweiten Anrufs an den zweiten Brückenknoten (142) und
Herstellen einer Sprachverbindung (7') des zweiten Anrufs an den ersten Brückenknoten (141).

10. System nach Anspruch 8 oder 9, wobei der erste Brückenknoten (140) derselbe wie der zweite Brückenknoten (140) ist.

11. Verfahren zum Herstellen einer Anrufverbindung zwischen einem Ursprungsgerät (A) und einem Endgerät (B), wobei sowohl das Ursprungsgerät (A) als auch das Endgerät (B) Zugang sowohl zu einem öffentlichen landgestützten Mobilfunknetzwerk (131, 132) als auch zu einem mobilen Datennetzwerk (121, 122) haben, wobei das Ursprungsgerät (A) und das Endgerät (B) jeweils ein softwareimplementiertes Anrufabwicklungsprogramm (SWA; SWB) enthalten, das dazu konfiguriert ist, einen Nutzer beim Tätigen und Entgegennehmen von Anrufen zu unterstützen, unter Verwendung eines Serverknotens (110), der mit dem mobilen Datennetzwerk (121, 122) verbunden ist, und mindestens eines Brückenknotens (140, 141, 142), der mit dem Serverknoten (110), dem mobilen Datennetzwerk (121, 122) und dem öffentlichen landgestützten Mobilfunknetzwerk (131, 132) verbunden ist, das Verfahren umfassend:
Empfangen, in dem Serverknoten (110), einer Anrufaufbauanfrage (1) von dem Ursprungsgerät (A), wobei die Anrufaufbauanfrage (1) von dem softwareimplementierten Anrufabwicklungsprogramm (SWA) in dem Ursprungsgerät (A) als Reaktion auf einen Anrufaufbaubefehl eines Nutzers des Ursprungsgeräts (A) erzeugt wird, wobei die Anrufaufbauanfrage (1) eine Identität des Endgeräts (B) angibt, und,
auf der Grundlage der Anrufaufbauanfrage (1), Herstellen einer Anrufverbindung zwischen dem Ursprungsgerät (A) und dem Endgerät (B) über mindestens eine Konferenzbrücke (145, 146, 147) in dem mindestens einen Brückenknoten (140, 141, 142), Tätigen, über das softwareimplementierte Anrufabwicklungsprogramm (SWA) in dem Ursprungsgerät (A), eines ersten Anrufs (1) an einen ersten Brückenknoten (140, 141) aus den mindestens einen Brückenknoten über das öffentliche landgestützte Mobilfunknetzwerk (131) unter Verwendung einer ersten Telefonnummer (#1), die in dem Ursprungsgerät (A) gespeichert ist, als Reaktion auf den Anrufaufbaubefehl,
Senden, von dem Serverknoten (110), als Reaktion auf die Anrufaufbauanfrage (1), einer Dienstnachricht (4) an das Endgerät (B), wobei die Dienstnachricht (4) eine Identität des Ursprungsgeräts (A) und ein Gesuch zum Herstellen einer Sprachverbindung mit dem Endgerät (B) angibt,
Erzeugen, in dem softwareimplementierten Anrufabwicklungsprogramm (SWB) in dem Endgerät (B), als Reaktion auf die Dienstnachricht (4), eines Alarmsignals (5), das dazu angepasst ist, einen Nutzer des Endgeräts (B) über einen eingehenden Anruf von dem Ursprungsgerät (A) zu benachrichtigen, und wobei, nach dem Einleiten des Alarmsignals (5), das Verfahren umfasst:
Tätigen, über das softwareimplementierte Anrufabwicklungsprogramm (SWB) in dem Endgerät (B), eines zweiten Anrufs (7) an einen zweiten Brückenknoten (140, 142) aus den mindestens einen Brückenknoten als Reaktion auf einen Annahmebefehl (6) von einem Nutzer des mindestens einen Endgeräts (B), wobei der zweite Anruf (7) über das öffentliche landgestützte Mobilfunknetzwerk (132) unter Verwendung einer zweiten Telefonnummer (#2) getätigt wird,
**gekennzeichnet durch**
Auswählen, durch das softwareimplementierte Anrufabwicklungsprogramm (SWB) in dem Endgerät (B), der zweiten Telefonnummer (#2) auf der Grundlage eines Standorts des Endgeräts (B).

12. Verfahren nach Anspruch 11, umfassend:
Auswählen, durch das softwareimplementierte Anrufabwicklungsprogramm (SWA) in dem Ursprungsgerät (A), der ersten Telefonnummer (#1) auf der Grundlage eines Standorts des Ursprungsgeräts (A).

13. Verfahren nach einem der Ansprüche 11 oder 12, umfassend:
Tätigen, über das softwareimplementierte Anrufabwicklungsprogramm (SWA) in dem Ursprungsgerät (A), des ersten Anrufs (2) vor dem Senden der Anrufaufbauanfrage (1) an den Serverknoten (110).

14. Verfahren nach einem der Ansprüche 11 bis 13, umfassend:
Tätigen, über das softwareimplementierte Anrufabwicklungsprogramm (SWA) in dem Ursprungsgerät (A), des ersten Anrufs (2) parallel zum oder nach dem Senden der Anrufaufbauanfrage (1) an den Serverknoten (110).

15. Verfahren nach einem der Ansprüche 11 bis 14, umfassend:
Senden, als Reaktion auf den ersten Anruf (2), einer ersten Brückenbestätigungsnachricht (3, 3') von dem ersten Brückenknoten (140, 141) an den Serverknoten (110), wobei die erste Brückenbestätigungsnachricht (3; 3') eine erste Netzwerkadresse des ersten Brückenknotens (140; 141) aufführt.

16. Verfahren nach einem der Ansprüche 11 bis 15, wobei die zweite Telefonnummer (#2) in dem Endgerät (B) gespeichert ist.

17. Verfahren nach einem der Ansprüche 11 bis 16, umfassend:
Senden, als Reaktion auf den zweiten Anruf (7), einer zweiten Brückenbestätigungsnachricht (8; 8') von dem zweiten Brückenknoten (140, 142) an den Serverknoten (110), wobei die zweite Brückenbestätigungsnachricht (8; 8') eine zweite Netzwerkadresse des zweiten Brückenknotens (140; 141 142) aufführt; und
Senden, als Reaktion auf die Brückenbestätigungsnachricht (8; 8'), mindestens einer Brückenanforderungsnachricht (9; 9', 9") an den ersten und zweiten Brückenknoten (140; 141, 142).

18. Verfahren nach Anspruch 17, umfassend:
Bewirken, als Reaktion auf die Brückenanforderungsnachricht (9; 9', 9"), dass der erste und zweite Brückenknoten (140; 141, 142) das Ursprungsgerät (A) mit dem Endgerät (B) über die mindestens eine Konferenzbrücke (145; 146, 146) verbinden (10; 10', 10").

19. Verfahren nach einem der Ansprüche 11 bis 18, umfassend:
Herstellen einer anfänglichen Signalisierungsverbindung (7) des zweiten Anrufs zwischen dem Endgerät (B) und dem zweiten Brückenknoten (142), wobei dieser zweite Brückenknoten (142) mit einem öffentlichen landgestützten Mobilfunknetzwerk (132) verbunden ist, durch welches das Endgerät (B) kommuniziert, und
Herstellen einer Sprachverbindung (7') des zweiten Anrufs zwischen dem Endgerät (B) und dem ersten Brückenknoten (141), wobei das Endgerät (B) kommuniziert.

20. Verfahren nach einem der Ansprüche 18 oder 19, wobei der erste Brückenknoten (140) derselbe wie der zweite Brückenknoten (140) ist.

21. Computerprogrammprodukt, das in den Speicher mindestens eines Prozessors ladbar ist, umfassend Software zum Ausführen des Verfahrens nach einem der Ansprüche 11 bis 20, wenn das Computerprogrammprodukt auf dem mindestens einen Prozessor ausgeführt wird.

22. Prozessorlesbares Medium, umfassend Befehle, welche bei Ausführung durch mindestens einen Prozessor bewirken, dass der mindestens eine Prozessor ein Verfahren nach einem der Ansprüche 11 bis 20 durchführt.

## Revendications

1. Système destiné à établir un appel entre un dispositif d'origine (A) et un dispositif de terminaison (B), le dispositif d'origine (A) et le dispositif de terminaison (B) ayant chacun accès à la fois à un réseau mobile terrestre public (131, 132) et à un réseau de données mobile (121, 122), le dispositif d'origine (A) et le dispositif de terminaison (B) incluant un outil respectif de traitement d'appels mis en œuvre par logiciel (SWA ; SWB) configuré de manière à assister un utilisateur dans le cadre d'un processus consistant à passer et recevoir des appels, le système comprenant :
un nœud de serveur (110) connecté au réseau de données mobile (121, 122) ; et
au moins un nœud de pont (140, 141, 142) connecté au nœud de serveur (110), au réseau de données mobile (121, 122) et au réseau mobile terrestre public (131, 132), le nœud de serveur (110) étant configuré de manière à :
recevoir une demande d'établissement d'appel (1) en provenance du dispositif d'origine (A), la demande d'établissement d'appel (1) étant générée par l'outil de traitement d'appels mis en œuvre par logiciel (SWA) dans le dispositif d'origine (A), en réponse à une instruction d'établissement d'appel en provenance d'un utilisateur du dispositif d'origine (A), la demande d'établissement d'appel (1) indiquant une identité du dispositif de terminaison (B) ; et
sur la base de la demande d'établissement d'appel (1), établir un appel entre le dispositif d'origine (A) et le dispositif de terminaison (B) sur au moins un pont de conférence (145, 146, 147) dans ledit au moins un nœud de pont (140, 141, 142) ;
dans lequel, en réponse à l'instruction d'établissement d'appel, l'outil de traitement d'appels mis en œuvre par logiciel (SWA) dans le dispositif d'origine (A) est en outre configuré de manière à émettre un premier appel (2) vers un premier nœud de pont (140, 141) dudit au moins un nœud de pont sur le réseau mobile terrestre public (131) en utilisant un premier numéro de téléphone (#1) stocké dans le dispositif d'origine (A) ;
dans lequel, en réponse à la demande d'établissement d'appel (1), le nœud de serveur (110) est configuré de manière à envoyer un message de service (4) au dispositif de terminaison (B), le message de service (4) indiquant une identité du dispositif d'origine (A) et une pétition pour établir une connexion vocale avec le dispositif de terminaison (B) ; dans lequel, en réponse au message de service (4), l'outil de traitement d'appels mis en œuvre par logiciel (SWB) dans le dispositif de terminaison (B) est configuré de manière à générer un signal d'alerte (5) apte à notifier, à un utilisateur du dispositif de terminaison (B), un appel entrant en provenance du dispositif d'origine (A) ; et
dans lequel, après avoir initié le signal d'alerte (5), l'outil de traitement d'appels mis en œuvre par logiciel (SWB) dans le dispositif de terminaison (B) est configuré de manière à émettre un second appel (7) vers un second nœud de pont (140, 142) dudit au moins un nœud de pont, en réponse à une instruction d'acceptation (6) en provenance d'un utilisateur du dispositif de terminaison (B), le second appel (7) étant émis sur le réseau mobile terrestre public (132) en utilisant un second numéro de téléphone (#2),
**caractérisé en ce que** :
l'outil de traitement d'appels mis en œuvre par logiciel (SWB) dans le dispositif de terminaison (B) est configuré de manière à sélectionner le second numéro de téléphone (#2) sur la base d'un emplacement du dispositif de terminaison (B).

2. Système selon la revendication 1, dans lequel l'outil de traitement d'appels mis en œuvre par logiciel (SWA) dans le dispositif d'origine (A) est configuré de manière à sélectionner le premier numéro de téléphone (#1) sur la base d'un emplacement du dispositif d'origine (A).

3. Système selon l'une quelconque des revendications 1 et 2, dans lequel l'outil de traitement d'appels mis en œuvre par logiciel (SWA) dans le dispositif d'origine (A) est configuré de manière à émettre le premier appel (2) avant d'envoyer la demande d'établissement d'appel (1) au nœud de serveur (110).

4. Système selon l'une quelconque des revendications 1 et 2, dans lequel l'outil de traitement d'appels mis en œuvre par logiciel (SWA) dans le dispositif d'origine (A) est configuré de manière à émettre le premier appel (2) parallèlement à, ou après, l'envoi de la demande d'établissement d'appel (1) au nœud de serveur (110).

5. Système selon l'une quelconque des revendications précédentes, dans lequel, en réponse au premier appel (2), le premier nœud de pont (140, 141) est configuré de manière à envoyer un premier message de reconnaissance de pont (3 ; 3') au nœud de serveur (110), le premier message de reconnaissance de pont (3 ; 3') spécifiant une première adresse de réseau du premier nœud de pont (140 ; 141).

6. Système selon l'une quelconque des revendications précédentes, dans lequel le second numéro de téléphone (#2) est stocké dans le dispositif de terminaison (B).

7. Système selon l'une quelconque des revendications précédentes, dans lequel,
en réponse au second appel (7), le second nœud de pont (140, 142) est configuré de manière à envoyer un second message de reconnaissance de pont (8 ; 8') au nœud de serveur (110), le second message de reconnaissance de pont (8 ; 8') spécifiant une seconde adresse de réseau du second nœud de pont (140 ; 141, 142) ; et
en réponse aux premier et second messages de reconnaissance de pont (3, 8 ; 3', 8'), le nœud de serveur (110) est configuré de manière à envoyer au moins un message d'invite de pont (9 ; 9', 9" aux premier et second nœuds de pont (140 ; 141, 142).

8. Système selon la revendication 7, dans lequel, en réponse audit au moins un message d'invite de pont (9 ; 9', 9"), les premier et second nœuds de pont (140 ; 141, 142) sont configurés de manière à occasionner (10 ; 10', 10") une connexion (11) entre le dispositif d'origine (A) et le dispositif de terminaison (B) sur ledit au moins un pont de conférence (145).

9. Système selon l'une quelconque des revendications précédentes, dans lequel le dispositif de terminaison (B) est configuré de manière à :
établir une connexion de signalisation initiale (7) du second appel au second nœud de pont (142) ; et
établir une connexion vocale (7') du second appel au premier nœud de pont (141).

10. Système selon la revendication 8 ou 9, dans lequel le premier nœud de pont (140) est identique au second nœud de pont (140).

11. Procédé d'établissement d'un appel entre un dispositif d'origine (A) et un dispositif de terminaison (B), le dispositif d'origine (A) et le dispositif de terminaison (B) ayant chacun accès à la fois à un réseau mobile terrestre public (131, 132) et à un réseau de données mobile (121, 122), le dispositif d'origine (A) et le dispositif de terminaison (B) incluant un outil respectif de traitement d'appels mis en œuvre par logiciel (SWA ; SWB) configuré de manière à assister un utilisateur dans le cadre d'un processus consistant à passer et recevoir des appels en utilisant un nœud de serveur (110) connecté au réseau de données mobile (121, 122) et au moins un nœud de pont (140, 141, 142) connecté au nœud de serveur (110), au réseau de données mobile (121, 122) et au réseau mobile terrestre public (131, 132), le procédé comprenant les étapes ci-dessous consistant à :
recevoir, dans le nœud de serveur (110), une demande d'établissement d'appel (1) en provenance du dispositif d'origine (A), la demande d'établissement d'appel (1) étant générée par l'outil de traitement d'appels mis en œuvre par logiciel (SWA) dans le dispositif d'origine (A), en réponse à une instruction d'établissement d'appel en provenance d'un utilisateur du dispositif d'origine (A), la demande d'établissement d'appel (1) indiquant une identité du dispositif de terminaison (B) ; et
sur la base de la demande d'établissement d'appel (1), établir un appel entre le dispositif d'origine (A) et le dispositif de terminaison (B) sur au moins un pont de conférence (145, 146, 147) dans ledit au moins un nœud de pont (140, 141, 142), émettre, par l'intermédiaire de l'outil de traitement d'appels mis en œuvre par logiciel (SWA) dans le dispositif d'origine (A), un premier appel (1) vers un premier nœud de pont (140, 141) dudit au moins un nœud de pont sur le réseau mobile terrestre public (131) en utilisant un premier numéro de téléphone (#1) stocké dans le dispositif d'origine (A), en réponse à l'instruction d'établissement d'appel;
envoyer, à partir du nœud de serveur (110), en réponse à la demande d'établissement d'appel (1), un message de service (4) au dispositif de terminaison (B), le message de service (4) indiquant une identité du dispositif d'origine (A) et une pétition pour établir une connexion vocale avec le dispositif de terminaison (B) ;
générer, dans l'outil de traitement d'appels mis en œuvre par logiciel (SWB) dans le dispositif de terminaison (B), en réponse au message de service (4), un signal d'alerte (5) apte à notifier, à un utilisateur du dispositif de terminaison (B), un appel entrant en provenance du dispositif d'origine (A), et dans lequel, après avoir initié le signal d'alerte (5), le procédé comprend l'étape ci-dessous consistant à :
émettre, par l'intermédiaire de l'outil de traitement d'appels mis en œuvre par logiciel (SWB) dans le dispositif de terminaison (B), un second appel (7) vers un second nœud de pont (140, 142) dudit au moins un nœud de pont, en réponse à une instruction d'acceptation (6) en provenance d'un utilisateur dudit au moins un dispositif de terminaison (B), le second appel (7) étant émis sur le réseau mobile terrestre public (132) en utilisant un second numéro de téléphone (#2),
**caractérisé par** l'étape ci-dessous consistant à :
sélectionner, par l'intermédiaire de l'outil de traitement d'appels mis en œuvre par logiciel (SWB) dans le dispositif de terminaison (B), le second numéro de téléphone (#2) sur la base d'un emplacement du dispositif de terminaison (B).

12. Procédé selon la revendication 11, comprenant l'étape ci-dessous consistant à :
sélectionner, par l'intermédiaire de l'outil de traitement d'appels mis en œuvre par logiciel (SWA) dans le dispositif d'origine (A), le premier numéro de téléphone (#1) sur la base d'un emplacement du dispositif d'origine (A).

13. Procédé selon l'une quelconque des revendications 11 et 12, comprenant l'étape ci-dessous consistant à :
émettre, par l'intermédiaire de l'outil de traitement d'appels mis en œuvre par logiciel (SWA) dans le dispositif d'origine (A), le premier appel (2), avant d'envoyer la demande d'établissement d'appel (1) au nœud de serveur (110).

14. Procédé selon l'une quelconque des revendications 11 à 13, comprenant l'étape ci-dessous consistant à :
émettre, par l'intermédiaire de l'outil de traitement d'appels mis en œuvre par logiciel (SWA) dans le dispositif d'origine (A), le premier appel (2) parallèlement à, ou après, l'envoi de la demande d'établissement d'appel (1) au nœud de serveur (110).

15. Procédé selon l'une quelconque des revendications 11 à 14, comprenant l'étape ci-dessous consistant à :
envoyer, en réponse au premier appel (2), un premier message de reconnaissance de pont (3 ; 3'), du premier nœud de pont (140, 141) au nœud de serveur (110), le premier message de reconnaissance de pont (3 ; 3') spécifiant une première adresse de réseau du premier nœud de pont (140 ; 141).

16. Procédé selon l'une quelconque des revendications 11 à 15, dans lequel le second numéro de téléphone (#2) est stocké dans le dispositif de terminaison (B).

17. Procédé selon l'une quelconque des revendications 11 à 16, comprenant les étapes ci-dessous consistant à :
envoyer, en réponse au second appel (7), un second message de reconnaissance de pont (8 ; 8'), du second nœud de pont (140, 142) au nœud de serveur (110), le second message de reconnaissance de pont (8 ; 8') spécifiant une seconde adresse de réseau du second nœud de pont (140 ; 141, 142) ; et
envoyer, en réponse au message de reconnaissance de pont (8 ; 8'), au moins un message d'invite de pont (9 ; 9', 9") aux premier et second nœuds de pont (140 ; 141, 142).

18. Procédé selon la revendication 17, comprenant l'étape ci-dessous consistant à :
occasionner, en réponse au message d'invite de pont (9 ; 9', 9"), une connexion (10 ; 10', 10") des premier et second nœuds de pont (140 ; 141, 142) au dispositif d'origine (A) avec le dispositif de terminaison (B) sur ledit au moins pont de conférence (145 ; 146, 147).

19. Procédé selon l'une quelconque des revendications 11 à 18, comprenant les étapes ci-dessous consistant à :
établir une connexion de signalisation initiale (7) du second appel entre le dispositif de terminaison (B) et le second nœud de pont (142), lequel second nœud de pont (142) est connecté à un réseau mobile terrestre public (132) par le biais duquel le dispositif de terminaison (B) communique ; et
établir une connexion vocale (7') du second appel entre le dispositif de terminaison (B) et le premier nœud de pont (141) et dans lequel le dispositif de terminaison (B) communique.

20. Procédé selon l'une quelconque des revendications 18 et 19, dans lequel le premier nœud de pont (140) est identique au second nœud de pont (140).

21. Produit-programme informatique pouvant être chargé dans la mémoire d'au moins un processeur, comprenant un logiciel pour exécuter le procédé selon l'une quelconque des revendications 11 à 20, lorsque ledit produit-programme informatique est exécuté sur ledit au moins un processeur.

22. Support lisible par processeur comprenant des instructions qui, lorsqu'elles sont exécutées par au moins un processeur, amènent ledit au moins un processeur à mettre en œuvre un procédé selon l'une quelconque des revendications 11 à 20.
